# FASCICULE DE BREVET EUROPEEN

(11) **EP 2 702 357 B1**
(45) Date de publication et mention de la délivrance du brevet: **03.06.2015**
(21) Numéro de dépôt: 12714724.7
(22) Date de dépôt: 19.04.2012
(51) Int. Cl.: G01C 17/00, G01C 17/38, G01C 19/38

(54) **APPAREIL D'ORIENTATION INCLUANT DES MOYENS POUR DETECTER QU'IL EST POSE A PLAT SUR UN SUPPORT**
AUSRICHTUNGSVORRICHTUNG MIT MITTELN ZUR ERKENNUNG DAS DIE VORRICHTUNG FLACH AUF EINEM TRÄGER LIEGT
ORIENTATION DEVICE INCLUDING MEANS FOR DETECTING THAT THE DEVICE IS LYING FLAT ON A SUPPORT

(30) Priorité: 29.04.2011 FR 1101331
(43) Date de publication de la demande: 05.03.2014
(73) Titulaire: SAGEM DEFENSE SECURITE, 92100 Boulogne Billancourt (FR)
(72) Inventeur: BECHERET, Yves, F-75015 Paris (FR)
(74) Mandataire: Beaudouin-Lafon, Emmanuel
(86) Numéro de dépôt international: PCT/EP2012/057208
(87) Numéro de publication internationale: WO 2012/146532

(56) Documents cités:
- US-A1- 2009 089 001

## Description

L'invention concerne l'optimisation de la détermination du Nord avec un appareil d'orientation comprenant un chercheur de Nord géographique incluant par exemple un organe de type gyromètre associé à des moyens de calcul.

### ARRIERE PLAN DE L'INVENTION

L'invention est destinée à être utilisée notamment avec des jumelles de visée, destinées à permettre à un fantassin d'identifier une cible notamment par le cap de visée dans lequel il voit cette cible dans ses jumelles.

Concrètement, lorsqu'il utilise de telles jumelles, le fantassin doit les fixer et les connecter à un appareil d'orientation, qui est un chercheur de Nord géographique, et qui fournit à ces jumelles une information représentative de l'orientation du Nord.

En pratique, le chercheur de Nord est intégré à un trépied auquel les jumelles se fixent de telle manière qu'elles sont rigidement solidarisées au chercheur de Nord. Lorsque le fantassin installe son matériel, il doit dans un premier temps mettre en place le trépied et monter les jumelles sur celui-ci.

L'ensemble doit être mis en place sur un support fixe pour être immobile par rapport au sol, et disposé de manière horizontale, afin que le chercheur de Nord géographique puisse fonctionner correctement.

Lorsque l'ensemble est en place, le fantassin déclenche le processus d'identification du Nord géographique, en actionnant par exemple une commande correspondante du chercheur de Nord.

Dans le processus d'identification, l'organe de type gyromètre et les moyens de calcul associés déterminent la projection de l'axe de rotation de la terre dans un plan tangent à la surface de la terre, c'est-à-dire horizontal, à l'emplacement considéré, la direction de cette projection correspondant à l'orientation du Nord géographique.

Par exemple, le document US 2009/0089001 décrit un chercheur de Nord intégré à un trépied de ce type.

5 Plus concrètement, l'organe de type gyromètre mesure les mouvements qu'il subit pour déterminer l'axe de rotation de la terre, de sorte que le processus de détermination du Nord est en fin de compte relativement long. La précision recherchée étant de l'ordre du milli radian, le processus de détermination du Nord géographique prend plusieurs minutes.

Une fois que la détermination du Nord est terminée, le fantassin peut utiliser sa jumelle pour déterminer l'orientation d'une ou plusieurs cibles par rapport au Nord, l'information du Nord étant transmise aux jumelles et affichée dans celles-ci.

En pratique, la durée correspondant à la mise en oeuvre des différentes étapes nécessaires pour qu'un fantassin détermine le cap d'une ou plusieurs cibles est importante, compte tenu notamment de la durée nécessaire à la détermination du Nord géographique par le chercheur de Nord.

### OBJET DE L'INVENTION

Le but de l'invention est de proposer une solution pour réduire la durée nécessaire pour qu'un fantassin disposant d'un tel équipement puisse déterminer le cap d'une ou plusieurs cibles à identifier.

### RESUME DE L'INVENTION

A cet effet, l'invention a pour objet un appareil d'orientation comprenant un chercheur de Nord géographique incluant un organe de type gyromètre ainsi que des capteurs permettant de mesurer l'inclinaison de cet appareil par rapport à l'horizontale, et des moyens de calcul associés pour déterminer l'orientation du Nord géographique sur la base d'informations issues de l'organe de type gyromètre et desdits capteurs d'inclinaison, comportant trois pieds destinés à le supporter lorsqu'il est posé sur un support, caractérisé en ce que l'un au moins de ces pieds intègre un capteur changeant d'état lorsque l'appareil repose sur un support par ses pieds, et en ce qu'il comporte des moyens pour déclencher automatiquement une détermination de l'orientation du Nord lorsque l'appareil est suffisamment horizontal et que le capteur indique qu'il est posé sur un support.

Grâce à ses trois pieds dont l'un est équipé d'un capteur, l'appareil est apte à déterminer s'il est posé à plat sur un support. La séquence de détermination du Nord géographique peut ainsi être déclenchée de manière complètement automatisée dès que l'appareil détermine qu'il est posé à plat sur un support, ce qui confère un gain de temps significatif lors de la mise en place d'un tel appareillage.

L'invention a également pour objet un appareil tel que défini ci-dessus, comprenant en outre trois autres pieds agencés pour le poser à l'envers sur un support, et dans lequel l'un au moins des trois autres pieds comporte un capteur changeant d'état lorsque l'appareil repose à l'envers sur un support et par ces trois autres pieds, ainsi que des moyens pour déclencher automatiquement une détermination de l'orientation du Nord géographique lorsque l'appareil est suffisamment horizontal et que le capteur indique qu'il est posé à l'envers sur un support.

L'invention a également pour objet un appareil tel que défini ci-dessus, dans lequel les pieds sont agencés de telle manière qu'il ne peut être posé sur un support que en étant en appui sur trois de ses pieds.

L'invention a également pour objet un appareil tel que défini ci-dessus, intégrant en outre une jumelle de visée.

### DESCRIPTION DETAILLEE DE L'INVENTION

L'idée à la base de l'invention est d'enclencher de manière automatisée le processus de détermination du Nord géographique, dès que le chercheur de Nord est posé à plat, c'est-à-dire dès qu'il est orienté horizontalement en étant immobile.

Dans le mode de réalisation décrit ci-après, l'appareil d'orientation ou chercheur de Nord géographique est entièrement intégré à la jumelle de visée, pour constituer un unique appareil. Le chercheur de Nord géographique inclut un organe de type gyromètre avec des moyens de calcul et des capteurs additionnels.

Dans ces conditions, lorsque le fantassin pose sa jumelle à plat sur un support fixe, celle-ci identifie par elle-même qu'elle est immobile, de sorte qu'elle active le chercheur de Nord géographique pour enclencher automatiquement le processus de détermination du Nord.

Ainsi, lorsque le fantassin s'installe, dès qu'il pose sa jumelle à plat sur un support fixe cette jumelle déclenche de manière entièrement automatisée la détection de l'orientation du Nord géographique. Lorsqu'il la ressaisit, par exemple après avoir installé le reste de son matériel, la jumelle peut directement être utilisée pour déterminer l'orientation d'une ou plusieurs cibles.

En pratique, la jumelle comporte trois pieds à sa face inférieure, qui sont agencés de telle manière que la seule façon possible pour poser cette jumelle sur un support est qu'elle repose sur celui-ci par ses trois pieds. Au moins l'un de ces pieds est pourvu capteur, sous forme d'un contacteur électrique qui change d'état lorsque l'effort subi par le pied en question est supérieur à une valeur seuil prédéterminée, ce qui indique que la jumelle est posée.

Complémentairement, le chercheur de Nord intégré à la jumelle comporte des moyens de mesure de son inclinaison par rapport à l'horizontale afin de déterminer si ce chercheur de Nord est ou non suffisamment horizontal pour que le processus de détermination du Nord puisse se dérouler correctement.

Ces moyens d'évaluation de l'horizontalité, c'est-à-dire d'inclinaison par rapport à l'horizontale, peuvent être formés par un capteur incluant deux accéléromètre de type MEMS ou analogue, orientés à angle droit dans un plan qui est horizontal lorsque la jumelle est horizontale.

Ce capteur d'horizontalité ou d'inclinaison permet de déterminer si le chercheur de Nord est ou non suffisamment horizontal, et dans l'affirmative, il fournit aux moyens de calculs du chercheur de Nord une mesure de son inclinaison, qui est prise en compte par celui-ci pour la mesure de la rotation de la terre.

Lorsque le contacteur détecte qu'il subit un effort supérieur à une valeur seuil, et que les moyens de détection de l'horizontalité indiquent que le chercheur de Nord de la jumelle est suffisamment horizontal, cela signifie que la jumelle est posée à l'horizontale. Dans ce cas, le processus d'identification du Nord géographique au moyen de l'organe de type gyromètre et des moyens de calculs associés, est enclenché automatiquement.

De manière analogue, la jumelle peut également être pourvue à sa face supérieure de trois autres pieds qui sont eux aussi agencés de telle manière que la seule façon de poser cette jumelle sur un support par sa face supérieure est qu'elle repose conjointement sur ses trois pieds supérieurs.

Là aussi, l'un des pieds supérieurs de la jumelle est pourvu capteur, sous forme par exemple de contacteur électrique, ou autre détecteur qui change aussi d'état lorsqu'il identifie que le pied qu'il équipe est soumis à un effort supérieur à une valeurs seuil prédéterminée.

Dans ce cas, lorsque la jumelle est posée à l'envers sur un support, elle repose sur ce support par l'intermédiaire de ses trois pieds supérieurs, de sorte que le contacteur équipant l'un des pieds supérieurs change d'état. Si les moyens d'évaluation de l'horizontalité détectent que le chercheur de Nord, c'est-à-dire la jumelle, est suffisamment horizontale, le processus d'identification du Nord géographique est déclenché de manière complètement automatisée.

Les capteurs mesurant l'horizontalité du chercheur de Nord intégré à la jumelle, qui sont typiquement des accéléromètres de type MEMS, sont avantageusement aussi exploités pour déterminer si l'appareillage subit ou non des mouvements par rapport au sol durant le processus de détermination du Nord.

Le déclenchement de l'identification du Nord peut ainsi être conditionné non seulement au fait que la jumelle soit posée à l'horizontale, mais également au fait qu'elle ne subit pas d'accélération, c'est-à-dire au fait qu'elle est effectivement immobile par rapport au sol.

Dans ce cas, le déclenchement du processus de détermination du Nord est déclenché automatiquement seulement lorsque un capteur équipant un pied révèle qu'il subit un effort supérieur au seuil, et que la jumelle est horizontale, et que les accéléromètres indiquent qu'elle ne subit pas d'accélération.

Autrement dit, le contacteur de chaque pied est alors sécurisé par les données issues du ou des accéléromètres équipant la jumelle, ou de tout autre moyen de détection de mouvement pouvant éventuellement avoir une précision relativement faible en ce qui concerne la détection des mouvements de la jumelle.

Ainsi, l'on évite que le processus de détermination du Nord soit déclenché lorsque la jumelle est posée sur un support mobile, par exemple lorsque son utilisateur voyage dans un véhicule et qu'il a posé sa jumelle quelque part dans ce véhicule : dans ce cas, un contacteur peut être enfoncé, mais du fait que les accéléromètres détectent le mouvement du véhicule, le processus de détection du Nord n'est alors pas enclenché.

Dans l'exemple ci-dessus, le chercheur de Nord géographique est intégré à une jumelle. Mais l'invention s'applique aussi bien à un chercheur de Nord géographique indépendant. Dans ce cas, le fonctionnement est le même : le chercheur de Nord comporte trois pieds à sa face inférieure et éventuellement trois pieds à sa face supérieure, avec un ou plusieurs contacteurs. Lorsque le chercheur de Nord détecte qu'il est horizontal et qu'il repose sur un support, et éventuellement qu'il ne subit pas de mouvement, il enclenche alors automatiquement le processus de détermination du Nord géographique.

Enfin, il convient de noter que le déclenchement de la détermination du Nord géographique peut également être conditionné au respect de conditions additionnelles. En particulier, lorsque l'appareil est posé horizontalement et immobile, et qu'il vient d'identifier le Nord géographique, une nouvelle identification n'a pas à être enclenchée lorsque la précédente est terminée.

En pratique, différentes conditions supplémentaires sont prévues, pour provoquer l'identification du Nord géographique. Par exemple, si l'appareil est posé à l'horizontale immobile depuis un certain intervalle de temps, et qu'une identification du Nord a été réalisée antérieurement dans cet intervalle de temps prédéterminé, une nouvelle identification n'a pas à être enclenchée puisque l'information d'orientation du Nord réalisée antérieurement est encore valable.

## Revendications

1. Appareil d'orientation comprenant un chercheur de Nord géographique incluant un organe de type gyromètre ainsi que des capteurs permettant de mesurer l'inclinaison de cet appareil par rapport à l'horizontale, et des moyens de calcul associés pour déterminer l'orientation du Nord géographique sur la base d'informations issues de l'organe de type gyromètre et desdits capteurs d'inclinaison, comportant trois pieds destinés à le supporter lorsqu'il est posé sur un support, **caractérisé en ce que** l'un au moins de ces pieds intègre un capteur changeant d'état lorsque l'appareil repose sur un support par ses pieds, et et **en ce qu'**il comporte des moyens pour déclencher automatiquement une détermination de l'orientation du Nord lorsque l'appareil est suffisamment horizontal et que le capteur indique qu'il est posé sur un support.

2. Appareil selon la revendication 1, comprenant en outre trois autres pieds agencés pour le poser à l'envers sur un support, et dans lequel l'un au moins des trois autres pieds comporte un capteur changeant d'état lorsque l'appareil repose à l'envers sur un support et par ces trois autres pieds, ainsi que des moyens pour déclencher automatiquement une détermination de l'orientation du Nord géographique lorsque l'appareil est suffisamment horizontal et que le capteur indique qu'il est posé à l'envers sur un support.

3. Appareil selon la revendication 1 ou la revendication 2, dans lequel les pieds sont agencés de telle manière qu'il ne peut être posé sur un support que en étant en appui sur trois de ses pieds.

4. Appareil selon l'une des revendications précédentes intégrant en outre une jumelle de visée.

## Patentansprüche

1. Orientierungsgerät, umfassend einen Sucher von rechtweisend Nord, der ein Element nach Art eines Gyrometers enthält, sowie Sensoren, die das Messen der Neigung dieses Geräts gegenüber der Horizontalen ermöglichen, und dazugehörige Rechenmittel, um die Richtung von rechtweisend Nord auf der Basis von Informationen zu bestimmen, die aus dem Element nach Art eines Gyrometers und den genannten Neigungssensoren stammen, umfassend drei Beine, die dazu bestimmt sind, das Gerät zu stützen, wenn es auf einen Träger gestellt wird, **dadurch gekennzeichnet, dass** mindestens eines dieser Beine einen Sensor enthält, der den Zustand ändert, wenn das Gerät mit seinen Beinen auf einem Träger steht, und dadurch, dass es Mittel umfasst, um automatisch eine Bestimmung der Nordrichtung auszulösen, wenn das Gerät ausreichend horizontal ist und wenn der Sensor anzeigt, dass es auf einem Träger steht.

2. Gerät nach Anspruch 1, umfassend ferner drei weitere Beine, die derart ausgebildet sind, dass es umgekehrt auf einen Träger gestellt werden kann, und wobei mindestens eines der drei weiteren Beine einen Sensor umfasst, der den Zustand ändert, wenn das Gerät umgekehrt und mit diesen drei weiteren Beinen auf einem Träger steht, sowie Mittel zum automatischen Auslösen einer Bestimmung der Richtung von rechtweisend Nord, wenn das Gerät ausreichend horizontal ist und wenn der Sensor anzeigt, dass es umgekehrt auf einem Träger steht.

3. Gerät nach Anspruch 1 oder Anspruch 2, wobei die Beine derart ausgebildet sind, dass es nur dann auf einen Träger gestellt werden kann, wenn es auf drei seiner Beine gestützt ist.

4. Gerät nach einem der vorhergehenden Ansprüche, das ferner ein Zielfernglas enthält.

## Claims

1. An orientation device comprising a true-north finder including a member of rate gyro type and sensors for measuring the inclination of this device with respect to the horizontal, and associated calculation means for determining the orientation of true north on the basis of information issued by the rate-gyro-type member and said sensors, comprising three legs intended to support it when placed on a support, **characterized in that** at least one of these legs incorporates a sensor that changes state when the device is resting on a support via its legs, and **in that** it comprises means for automatically triggering a determination of the orientation of north when the device is sufficiently horizontal and the sensor is indicating that it is resting on a support.

2. The device as claimed in claim 1, further comprising three other legs designed so that it can be rested upside down on a support, and in which at least one of the three other legs comprises a sensor that changes state when the device is resting upside down on a support via these three other legs, as well as means for automatically triggering a determination of the orientation of true north when the device is sufficiently horizontal and the sensor is indicating that it is resting upside down on a support.

3. The device as claimed in claim 1 or claim 2, in which the legs are arranged in such a way that it cannot be rested on a support other than by resting on three of its legs.

4. The device as claimed in one of the preceding claims, which further incorporates sighting binoculars.
